# EUROPÄISCHE PATENTANMELDUNG

(11) **EP 1 026 437 A2**
(43) Veröffentlichungstag der Anmeldung: **09.08.2000**
(21) Anmeldenummer: 00100702.0
(22) Anmeldetag: 14.01.2000
(51) Int. Cl.: F17C 13/04, F17C 13/12

(54) **Gasflasche**

(30) Priorität: 04.02.1999 DE 19904462
(71) Anmelder: Weber, Peter, 74076 Heilbronn (DE)
(72) Erfinder: Weber, Peter, 74076 Heilbronn (DE)
(74) Vertreter: Clemens, Gerhard, Dr.-Ing.

(57) **Zusammenfassung**

Eine Gasflasche (10.1) als Speicherbehälter für ein unter Druck stehendes Gas oder Gasgemisch mit einer ersten Ventileinheit (12) mit einem Verschlusselement, einer im Inneren der Flasche (10) vorhandenen Einlassöffnung und einer über einen Kanal in Verbindung stehenden Auslassöffnung, wobei über die Stellung des Verschlusselements der ersten Ventileinheit (12) die Menge des nach außen strömenden Gases oder Gasgemisches einstellbar ist, zeichnet sich dadurch aus, dass eine zweite Ventileinheit (20.1) mit einem Verschlusselement (22.1) zwischen dem Inneren der Flasche (10.1) und der Einlassöffnung der ersten Ventileinheit (12) angeordnet ist, die auf die Strömungsgeschwindigkeit des ausströmenden Gases oder Gasgemisches anspricht und bei Erreichen einer maximalen Strömungsgeschwindigkeit den Strömungsweg dauerhaft selbsttätig absperrt.

## Beschreibung

### TECHNISCHES GEBIET

Die Erfindung betrifft eine Gasflasche als Speicherbehälter für ein unter Druck stehendes Gas oder Gasgemisch mit einer ersten Ventileinheit mit einem Verschlusselement, einer im Inneren der Flasche vorhandenen Einlassöffnung und einer über einen Kanal in Verbindung stehenden Auslassöffnung, wobei über die Stellung des Verschlusselements der ersten Ventileinheit die Menge des nach außen strömenden Gases oder Gasgemisches einstellbar ist.

### STAND DER TECHNIK

Derartige Gasflaschen werden beispielsweise für Schweißarbeiten benötigt, um die jeweiligen Schweißgase zur Verfügung zu stellen. Leere Gasflaschen werden wieder gefüllt. Die Gasflaschen selbst weisen ein relativ hohes Gewicht auf. Bei unsachgemäßer Handhabung beziehungsweise bei Unfällen kann es vorkommen, daß die erste Ventileinheit abgerissen oder so weit beschädigt wird, dass das Gas nahezu ungehindert ausströmen kann. Infolge des hohen Innendrucks entweicht das Gas schlagartig, so dass eine Art Raketenantriebsprinzip umgesetzt wird und die Gasflasche unkontrollierte Beschleunigungsbewegungen ausführt. Hierdurch kann es zu erheblichen Verletzungen der beteiligten Personen und/oder zu großen Sachschäden kommen.

### DARSTELLUNG DER ERFINDUNG

Ausgehend von dem genannten Stand der Technik liegt der vorliegenden Erfindung die Aufgabe beziehungsweise das technische Problem zugrunde, eine Gasflasche der eingangs genannten Art sicherheitstechnisch zu verbessern.

Die erfindungsgemäße Gasflasche ist durch die Merkmale des unabhängigen Anspruchs 1 gegeben. Vorteilhafte Ausgestaltungen und Weiterbildungen sind Gegenstand der abhängigen Ansprüche.

Die erfindungsgemäße Gasflasche zeichnet sich demgemäß dadurch aus, dass eine zweite Ventileinheit mit einem Verschlusselement zwischen dem Inneren der Flasche und der Einlassöffnung der ersten Ventileinheit angeordnet ist, die auf die Strömungsgeschwindigkeit des ausströmenden Gases oder Gasgemisches anspricht und bei Erreichen einer maximalen Strömungsgeschwindigkeit den Strömungsweg dauerhaft selbsttätig absperrt.

Durch den Einsatz einer zweiten selbsttätig schließenden Ventileinheit kann es zu den im Stand der Technik geschilderten Unfällen nicht mehr kommen. Sobald das Gas infolge einer Beschädigung der ersten Ventileinheit schlagartig austritt, sperrt die zweite Ventileinheit den Strömungsweg zuverlässig ab.

Um das Einsatzspektrum der zweiten Ventileinheit zu erhöhen, zeichnet sich eine besonders vorteilhafte Ausgestaltung dadurch aus, dass die Ansprechcharakteristik, das heißt die Höhe der maximalen Strömungsgeschwindigkeit, der zweiten Ventileinheit einstellbar ausgebildet ist.

Eine konstruktiv besonders einfach und damit wirtschaftlich umzusetzende Lösung zeichnet sich dadurch aus, dass die zweite Ventileinheit stirnwandseitig in der Gasflasche befestigt, insbesondere in diese eingeschraubt ist. Dabei kann gemäß einer vorteilhaften Ausgestaltung die erste Ventileinheit an der zweiten Ventileinheit befestigt, insbesondere in diese eingeschraubt sein.

Eine alternative Ausgestaltung zeichnet sich dadurch aus, dass die zweite Ventileinheit an der ersten Ventileinheit befestigt ist.

Eine besonders vorteilhafte Ausgestaltung, die die Wiederverwendbarkeit einer Gasflasche mit defekter erster Ventileinheit unter Einsatz der zweiten Ventileinheit ermöglicht, zeichnet sich dadurch aus, dass außenseitig an der Gasflasche eine Löseeinheit lösbar angeschlossen werden kann mit einem Betätigungselement, das auf das Verschlusselement der zweiten Ventileinheit einwirkt und dadurch der Strömungsweg wieder gezielt geöffnet werden kann.

Damit eine derartige Löseeinheit auch bei in einer Vielzahl bereits eingesetzten Gasflaschen problemlos angesetzt werden kann, zeichnet sich eine bevorzugte Ausgestaltung dadurch aus, dass die Löseeinheit als auf das vorhandene Außengewinde der Flasche aufschraubbar ausgebildet ist.

In vorteilhafter Art und Weise besitzt die Löseeinheit eine Auslassöffnung, an die eine Leitung angeschlossen werden kann, um das nach dem Betätigen des Betätigungselements der Löseeinheit ausströmende Gas auffangen zu können.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1a: schematische Seitenansicht einer Gasflasche mit Schutzkappe,
- Fig. 1b und 1c: schematische Darstellung einer Gasflasche mit erster und zweiter Ventileinheit,
- Fig. 2: schematische Detailschnittdarstellung einer Gasflasche im oberen Stirnbereich mit einem Ausführungsbeispiel einer ersten und einer zweiten Ventileinheit in normalem Betriebszustand,
- Fig. 3: schematische Detailschnittdarstellung einer Gasflache im oberen Bereich gemäß Fig. 2 bei abgebrochener erster Ventileinheit und aufgesetzter Löseeinheit,
- Fig. 4: stark schematisierte Schnittdarstellung des oberen Bereichs einer Gasflasche mit einer ersten und zweiten Ventileinheit im normalen Betriebszustand,
- Fig. 5: stark schematisierte Schnittdarstellung einer Gasflasche gemäß Fig. 4 bei abgebrochener erster Ventileinheit und geschlossener zweiter Ventileinheit,
- Fig. 6: stark schematisierte Schnittdarstellung der Gasflasche gem. Fig. 4 bei angesetzter Löseeinheit und
- Fig. 7: schematische Detailschnittdarstellung einer bekannten Gasflasche im oberen Stirnbereich mit einem Ausführungsbeispiel einer ersten und einer zweiten Ventileinheit in normalem Betriebszustand.

### WEGE ZUM AUSFÜHREN DER ERFINDUNG

Eine Gastflasche 10 weist einen länglichen, zylindrischen Speicherbehälter 11 auf, der mit einem unter Druck stehenden Gas gefüllt ist. Oberseitig ist eine Abschlußschutzkappe 50 aufgeschraubt, die die darunter befindliche erste Ventileinheit 12 gegen mechanische Beschädigung schützen soll.

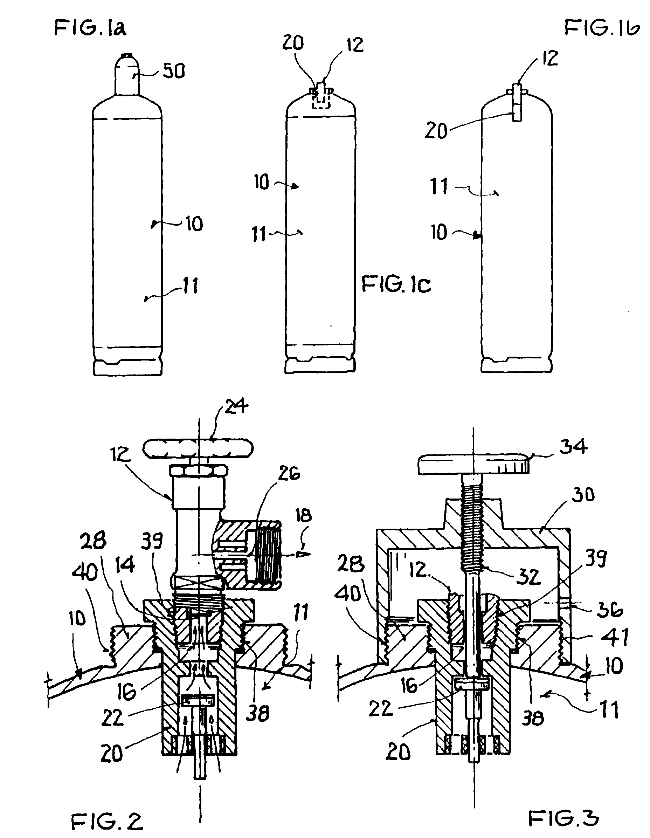

In den Figuren 1b und 1c sind schematisch zwei Ausführungsvarianten einer erfindungsgemäßen Gastflasche 10 dargestellt. Gemäß Fig. 1b ist neben der schematisch dargestellten ersten Ventileinheit 12, die als solche in bekannter Art und Weise eingesetzt wird, zum Inneren des Behälters 11 hin eine zweite Ventileinheit 20 angeordnet, die als selbsttätig absperrende Ventileinheit ausgebildet ist, sobald die Strömungsgeschwindigkeit des ausströmenden Gases einen vorbestimmbaren Maximalwert erreicht, was dann der Fall ist, wenn die erste Ventileinheit 12 beschädigt ist und somit das im Inneren des Behälters 11 befindliche Gas schlagartig ausströmt.

Figur 1c zeigt eine Ausführungsvariante, bei der die zweite Ventileinheit 20 an der Stirnseite des Behälters 11. befestigt ist und die erste Ventileinheit 12 innerhalb der zweiten Ventileinheit 20 angeschlossen ist.

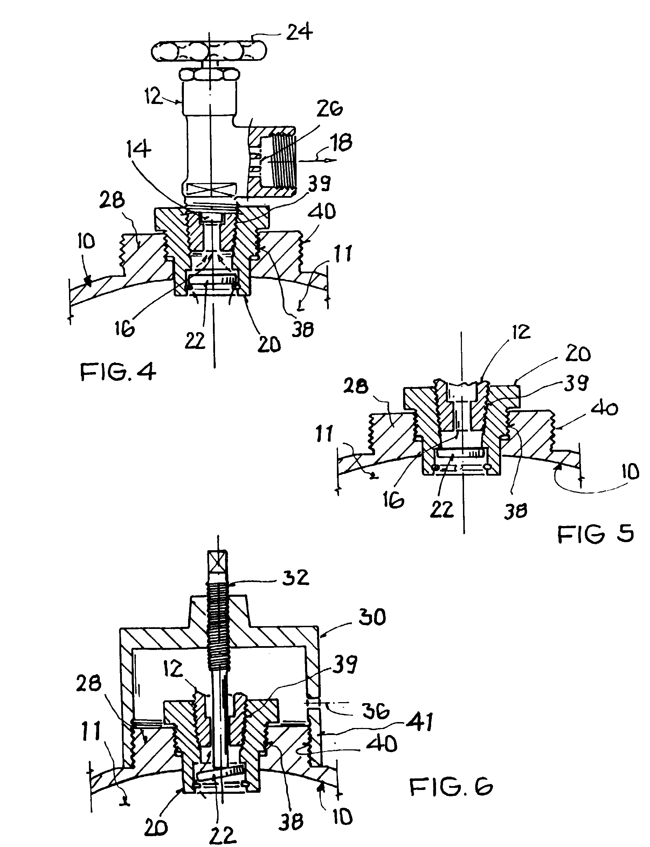

Die Figuren 4 und 5 zeigen stark schematisiert die Wirkungsweise der Ventileinheiten 12 beziehungsweise 20. Die erste Ventileinheit 12 besitzt eine ins Innere des Behälters 11 weisende Einlassöffnung 16, die über einen Kanal 26 mit einer Auslassöffnung 18 in Verbindung steht. Über ein Verschlusselement 14 kann der Strömungsweg über den Kanal 26 definiert geöffnet beziehungsweise geschlossen werden. Eine derartige Ventileinheit 12 ist bekannt. Neben der ersten Ventileinheit 12 ist eine zweite Ventileinheit 20 vorhanden, die in die obere Stirnwandung 28 des Behälters 11 über ein Gewinde 38 eingeschraubt ist. In die zweite Ventileinheit 20 ist die erste Ventileinheit 12 über ein Gewinde 39 eingeschraubt, derart, dass die Einlassöffnung 16 ins Innere des Behälters 11 zeigt.

Die zweite Ventileinheit 20 besitzt ein in Fig. 4 stark schematisiert dargestelltes Verschlusselement 22, das bei normalen Strömungsverhältnissen eine Position einnimmt, derart dass das im Inneren des Behälters 11 befindliche Gas bei geöffneter erster Ventileinheit ausströmen kann.

Wird nun die erste Ventileinheit 12 infolge unsachgemäßer Behandlung beschädigt, was in Fig. 5 schematisch dargestellt ist, kann das Gas schlagartig normalerweise ungehindert austreten. In diesem Moment spricht das Verschlusselement 22 der zweiten Ventileinheit 20 an und sorgt für eine dauerhaft zuverlässige Absperrung des Strömungsweges.

Um die Gasflasche 10 einer Wiederverwendung zuführen zu können, wird gem. Fig. 6 eine Löseeinheit 30 angesetzt, die ein Betätigungselement 32 besitzt, das auf das Absperrorgan 22 der zweiten Ventileinheit 20 einwirkt und somit ein gezieltes Ausströmen des im Inneren des Behälters 11 befindlichen Gases möglich ist. Die Löseeinheit 30 ist als topfförmige Einheit mit nach unten weisendem Flansch ausgebildet, wobei der Flansch in seinem inneren Endbereich ein Gewinde 41 aufweist, das auf das Außengewinde 40 der oberen Stirnwand 28 der Gasflasche 10 aufschraubbar ist.Auch eine ndere Anschlußart ist denkbar.

Das Betätigungselement ist in dem schematisch dargestellten Ausführungsbeispiel gem. Fig. 6 als Schubstange ausgebildet, die gewindemäßig über den Boden der Löseeinheit 30 eingeführt wird und durch Drehung auf das Verschlusselement 22 der zweiten Ventileinheit 20 einwirkt und diese definiert in das Innere des Behälters 11 verschiebt, so dass der Strömungsweg wieder freigegeben wird, und das ausströmende Gas über eine Auslassöffnung 36 der Löseeinheit 30 mit nicht dargestellter anschließbarer Leitung entnommen werden kann.

Die Figuren 2 und 3 entsprechen konstruktiv vereinfachten Umsetzungen von Ausführungsbeispielen der ersten und zweiten Ventileinheit 12, 20 gem. der schematischen Darstellung in den Figuren 4 und 6. Dabei ist zu erkennen, dass gem. Fig. 2 das Verschlusselement 14 der ersten Ventileinheit 12 über ein Handrad einstellbar ist. Innerhalb der zweiten Ventileinheit 20 können in den Figuren 2 und 3 nicht näher dargestellte Federelemente vorhanden sein, die das Verschlusselement 22 der zweiten Ventileinheit 20 in definierten Positionen halten.

Gem. Fig. 3 ist am Betätigungselement 32 ebenfalls ein Handrad 34 vorhanden, durch dessen Drehung das Betätigungselement auf das Verschlusselement 22 der zweiten Ventileinheit 20 einwirkt und somit den Strömungsweg wieder öffnet.

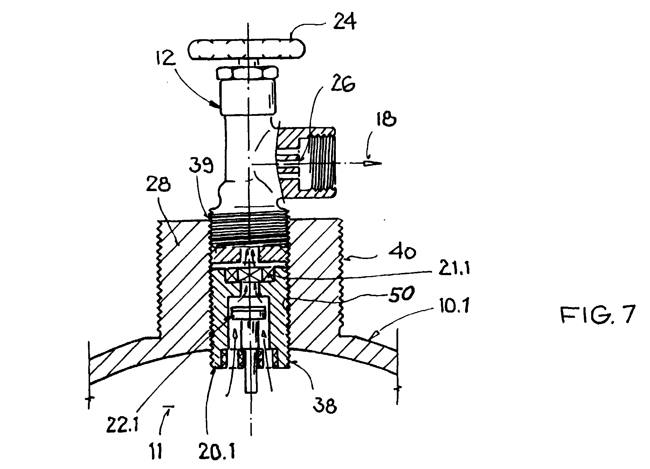

In Fig. 7 ist schematisch der obere Bereich einer bekannten Gasflasche 10.1 angegeben. Diese besitzt in der oberen Stirnwandung 28 eine durchgehende Ausnehmung mit Innengewinde 50. In dieses Innengewinde 50 wird zunächst die zweite Ventileinheit 20.2 eingeschraubt, die außenseitig ein entsprechendes Außengewinde 38 aufweist. Zum Ansatz eines Werkzeuges weist die zweite Ventileinheit 20.1 ein Mehrkantinnengewinde 21.1 auf der oberen Stirnseite auf. Danach wird die bekannte erste Ventileinheit 12 über ihr Gewinde 39 in das Innengewinde 50 in bekannter Art und Weise eingeschraubt. Gleiche Bauteile tragen dasselbe Bezugszeichen und werden nicht nochmals erläutert. Mit der in Fig. 7 beschriebenen Ausführungsform ist es problemlos möglich, bekannte Gasflaschen 10.1 mit einer zweiten Ventileinheit 20.1 nachzurüsten.

Mit der anmeldegemäßen Gasflasche mit zusätzlich zweiter Ventileinheit wird die Sicherheit beim Umgang mit derartigen Gasflaschen durch einfache konstruktive Maßnahmen, die wirtschaftlich umgesetzt werden können, deutlich erhöht, und somit das Unfallrisiko beziehungsweise die Verletzungsgefahr von Personen, die mit derartigen Gasflaschen umgehen müssen, stark vermindert.

## Patentansprüche

1. Gasflasche (10) als Speicherbehälter für ein unter Druck stehendes Gas oder Gasgemisch mit
- einer ersten Ventileinheit (12) mit einem Verschlusselement (14),einer im Inneren der Flasche (10) vorhandenen Einlassöffnung (16) und einer über einen Kanal (26) in Verbindung stehenden Auslassöffnung (18), wobei über die Stellung des Verschlusselements (14) der ersten Ventileinheit (12) die Menge des nach außen strömenden Gases oder Gasgemisches einstellbar ist,
**dadurch gekennzeichnet,** dass
- eine zweite Ventileinheit (20) mit einem Verschlusselement (22) zwischen dem Inneren der Flasche (10) und der Einlassöffnung (16) der ersten Ventileinheit (12) angeordnet ist, die auf die Strömungsgeschwindigkeit des ausströmenden Gases oder Gasgemisches anspricht und bei Erreichen einer maximalen Strömungsgeschwindigkeit den Strömungsweg dauerhaft selbsttätig absperrt.

2. Gasflasche nach Anspruch 1,
**dadurch gekennzeichnet,** dass
- die Ansprechcharakteristik, das heißt die Höhe der maximalen Strömungsgeschwindigkeit, der zweiten Ventileinheit (20) einstellbar ausgebildet ist.

3. Gasflasche nach Anspruch 1 und/oder 2,
**dadurch gekennzeichnet,** dass
- die zweite Ventileinheit (20) stirnwandseitig in der Gasflasche (10) befestigt, insbesondere in diese eingeschraubt ist.

4. Gasflasche nach Anspruch 3,
**dadurch gekennzeichnet,** dass
- die erste Ventileinheit (12) an der zweiten Ventileinheit (20) befestigt, insbesondere in diese eingeschraubt ist.

5. Gasflasche nach Anspruch 1 und/oder 2,
**dadurch gekennzeichnet,** dass
- die zweite Ventileinheit (20) an der ersten Ventileinheit (12) befestigt ist.

6. Gasflasche nach einem der Ansprüche 1 bis 3,
**dadurch gekennzeichnet,** dass
die zweite Ventileinheit (20.1) ein Außengewinde (38) aufweist, das in ein stirnseitig vorhandenes durchgehendes Innengewinde (50) einer bekannten Gasflasche (10.1) einschraubbar ist.

7. Gasflasche nach einem oder mehreren der vorstehenden Ansprüche,
**dadurch gekennzeichnet,** dass
- außenseitig an der Gasflasche (10) eine Löseeinheit (30) lösbar angeschlossen ist mit einem Betätigungselement (32), das auf das Verschlusselement (22) der zweiten Ventileinheit (20) einwirkt und dadurch der Strömungsweg wieder gezielt geöffnet werden kann.

8. Gasflasche mit einem stirnseitig vorhandenen Außengewinde (40), auf das eine Schutzkappe (50) zum Abdecken der ersten Ventileinheit (12) aufschraubbar ist, nach Anspruch 7,
**dadurch gekennzeichnet,** dass
- die Löseeinheit (30) als auf das Außengewinde (40) aufschraubbar ausgebildet ist.

9. Gasflasche nach Anspruch 7 und/oder 8,
**dadurch gekennzeichnet,** dass
- die Löseeinheit (30) eine Auslassöffnung (36) zum Anschluss einer Leitung aufweist.

10. Gasflasche nach Anspruch 7,
**dadurch gekennzeichnet,** dass
- das das Betätigungselement (32) manuell betätigbar ist.
